Europäisches Patentamt

European Patent Office

Office européen des brevets

(19)

(11) Numéro de publication : **0 140 734**
**B1**

(12) **FASCICULE DE BREVET EUROPÉEN**

(45) Date de publication du fascicule du brevet :
09.11.88

(21) Numéro de dépôt : **84401757.4**

(22) Date de dépôt : **04.09.84**

(51) Int. Cl.⁴ : **G 05 D 27/02**, F 24 F 11/00,
A 01 K 1/00

(54) **Interface de commande et de régulation de température et d'Hygrométrie.**

(30) Priorité : 06.09.83 FR 8314188

(43) Date de publication de la demande :
08.05.85 Bulletin 85/19

(45) Mention de la délivrance du brevet :
09.11.88 Bulletin 88/45

(84) Etats contractants désignés :
**BE CH DE GB IT LI NL SE**

(56) Documents cités :
**FR-A- 1 455 776**
**FR-A- 2 034 290**
**FR-A- 2 215 589**
**FR-A- 2 394 762**
**FR-A- 2 472 786**

(73) Titulaire : **ELECTRICITE DE FRANCE Service National**
**2, rue Louis Murat**
**F-75008 Paris (FR)**

(72) Inventeur : **Cormary, Yves**
**11, rue Enfer**
**F-77130 Ville St Jacques (FR)**
Inventeur : **Nicolas, Christian**
**9, Rue des Porettes**
**F-77210 Samoreau (FR)**

(74) Mandataire : **Martin, Jean-Jacques et al**
**Cabinet REGIMBEAU 26, Avenue Kléber**
**F-75116 Paris (FR)**

## Description

La présente invention concerne un interface de commande et de régulation de température et d'hygrométrie.

On connaît de nombreux dispositifs régulateurs de température, sensibles à la différence existant entre un signal de consigne de température et un signal de mesure de température délivré par un capteur, ces régulateurs produisant un signal de régulation de température d'amplitude variable, fonction de cette différence. Il en est ainsi notamment des régulateurs du type PI (proportionnel intégrateur). Le signal de régulation de température ainsi obtenu sert généralement à commander des moyens de chauffage à puissance variable, notamment des moyens électriques de chauffage.

Ainsi, le document FR-A-1 455 776 divulgue le réglage de la température et de l'humidité avec régulation simultanée d'aération et de chauffage ;

le document FR-A-2 215 589 divulgue la commande de la ventilation pour les températures élevées et la commande de chauffage quand la température ambiante descend au-dessous d'une valeur déterminée ;

le document FR-A-2 394 762 divulgue la commande, en fonction de plusieurs paramètres, de la ventilation et du chauffage, le passage de l'un à l'autre se faisant en fonction de la température extérieure ;

le document FR-A-2 034 290 divulgue la commande simultanée de la ventilation et du chauffage ;

le document FR-A-2 472 786 divulgue la commande de la température et de l'humidité avec une action par humidification ou chauffage suivant les valeurs de l'humidité et de la température.

On connaît de même de nombreux dispositifs régulateurs d'hygrométrie, sensibles à la différence existant entre un signal de consigne d'hygrométrie et un signal de mesure d'hygrométrie délivré par un capteur, ces régulateurs produisant un signal de régulation d'hygrométrie en fonction de la différence ainsi constatée. Ces régulateurs sont généralement du type P (proportionnel) et servent à commander des moyens de commande de ventilation, par exemple des ventilateurs dont le débit d'extraction est variable.

La régulation simultanée de ces deux paramètres, température et hygrométrie, pose très fréquemment de nombreux problèmes lorsque les régulateurs sont indépendants l'un de l'autre.

C'est le cas notamment des locaux d'élevage où une forte production de chaleur latente durant l'hiver impose de maintenir un niveau suffisant de ventilation pour conserver une hygrométrie acceptable pour les animaux ; ces locaux étant par ailleurs chauffés en hiver, on observe fréquemment une mauvaise coordination entre les deux actions (chauffage et ventilation) ce qui se traduit souvent par une ventilation à fort débit en même temps qu'un chauffage à forte puissance. Un des buts de l'invention est de remédier à ces inconvénients, en améliorant la régulation en température et en hygrométrie du local, évitant par ailleurs un gaspillage d'énergie. Cette gestion conjointe de la température et de l'hygrométrie s'applique également au domaine de l'habitat et au secteur tertiaire où les problèmes de régulation du chauffage et de la ventilation sont du même type, mais avec des points de consigne différents.

Pour cela, l'invention, telle qu'elle est définie dans les revendications, propose un interface coopérant avec le régulateur de température et le régulateur d'hygrométrie (en entrée) et avec les moyens de commande de chauffage et les moyens de commande de ventilation (en sortie).

L'interface est tout d'abord susceptible de passer d'une position d'été à une position d'hiver selon que le signal de mesure de température est supérieur ou inférieur, respectivement, à une valeur prédéterminée de changement de consigne. On opère ainsi une discrimination préalable entre les conditions de régulation d'été (chauffage hors service) et les conditions de régulation d'hiver (chauffage en service), le passage d'une position à l'autre s'effectuant autour d'un « point mort » par exemple situé aux alentours de 20 °C.

En position d'été, l'interface délivre aux moyens régulateurs de température un signal de régulation d'été, et délivre aux moyens de commande de ventilation un signal de commande de ventilation inversement proportionnel au signal de régulation de température délivré par les moyens régulateurs de température.

On assure ainsi une régulation de température par action sur la ventilation.

En position d'hiver, l'interface permet par contre de délivrer aux moyens régulateurs de température un signal de consigne de température d'hiver (différent du signal de consigne de température d'été) et de délivrer aux moyens de commande de chauffage un signal de commande de chauffage directement proportionnel au signal de régulation de température délivré par les moyens régulateurs de température.

On maintient ainsi, par action sur le chauffage, la température à sa valeur de consigne définie par le régulateur de température, le signal de consigne étant différent de celui déterminé pour la période d'été.

Avantageusement, en position d'hiver, l'interface délivre en outre aux moyens de commande de ventilation un signal de commande de ventilation proportionnel au signal de régulation d'hygrométrie, ce signal de commande de ventilation étant limité à une valeur supérieure inversement proportionnelle à l'amplitude du signal de régulation de température délivré par les moyens régulateurs de température.

On limite ainsi la ventilation en fonction de l'intensité du chauffage, cette limitation étant d'autant plus stricte que le chauffage est plus intense.

De préférence, il est prévu en outre des moyens pour limiter le signal de commande de ventilation à une valeur inférieure prédéterminée, cette limitation étant réalisée aussi bien en position d'été qu'en position d'hiver. Ceci permet d'éviter que la régulation apporte une gêne aux occupants du local, puisqu'il est possible de maintenir un débit minimum d'extraction.

D'autres caractéristiques et avantages de l'invention apparaîtront à la lecture de la description détaillée ci-dessous d'un mode de réalisation, en référence aux dessins annexés, sur lesquels :

- la figure 1 est une vue schématique de l'interface selon l'invention et des circuits avec lesquels il coopère,

- la figure 2 est un schéma électronique d'un mode de réalisation de cet interface.

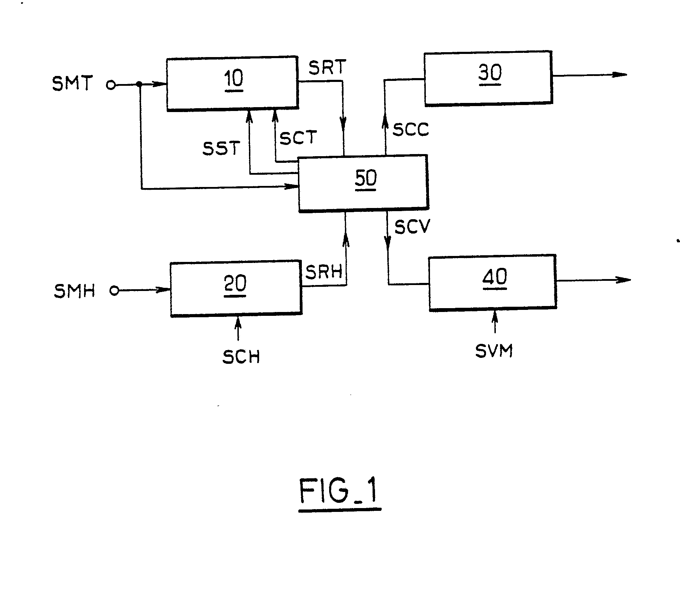

La figure 1 montre le régulateur de température 10 qui, en fonction de la différence existant entre un signal de mesure de température SMT et un signal de consigne de température SCT, délivre un signal de régulation de température SRT fonction de la différence constatée. Le régulateur est par exemple du type PI (proportionnel intégrateur), le signal SST commandant le sens d'action du régulateur (proportionnel direct ou proportionnel inverse).

Le régulateur d'hygrométrie 20 détermine la différence entre un signal de mesure d'hygrométrie SMH et un signal de consigne d'hygrométrie SCH et délivre un signal de régulation d'hygrométrie SRH en fonction de cette différence. Ce régulateur est par exemple du type P (proportionnel), le signal de régulation étant directement proportionnel à la différence mesurée.

La référence 30 désigne des moyens de commande de chauffage, par exemple une vanne de courant pour commande d'un chauffage électrique ; ces moyens permettent la commande d'une puissance de chauffe (variable) en fonction d'un signal de commande de chauffage SCC.

Les moyens de commande de ventilation 40 sont par exemple des moyens de commande d'un système de ventilation à débit variable. Le débit varie en fonction d'un signal de commande de ventilation SCV, le cas échéant avec maintien d'un seuil minimum de ventilation SVM.

Le régulateur 50 selon l'invention est relié aux différents organes précédemment décrits ; il reçoit du régulateur de température les signaux SMT et SRT et lui délivre les signaux SST et SCT ; il reçoit de même du régulateur d'hygrométrie le signal SRH. Par ailleurs, il délivre aux moyens de commande de chauffage et de ventilation les signaux SCC et SCV, respectivement.

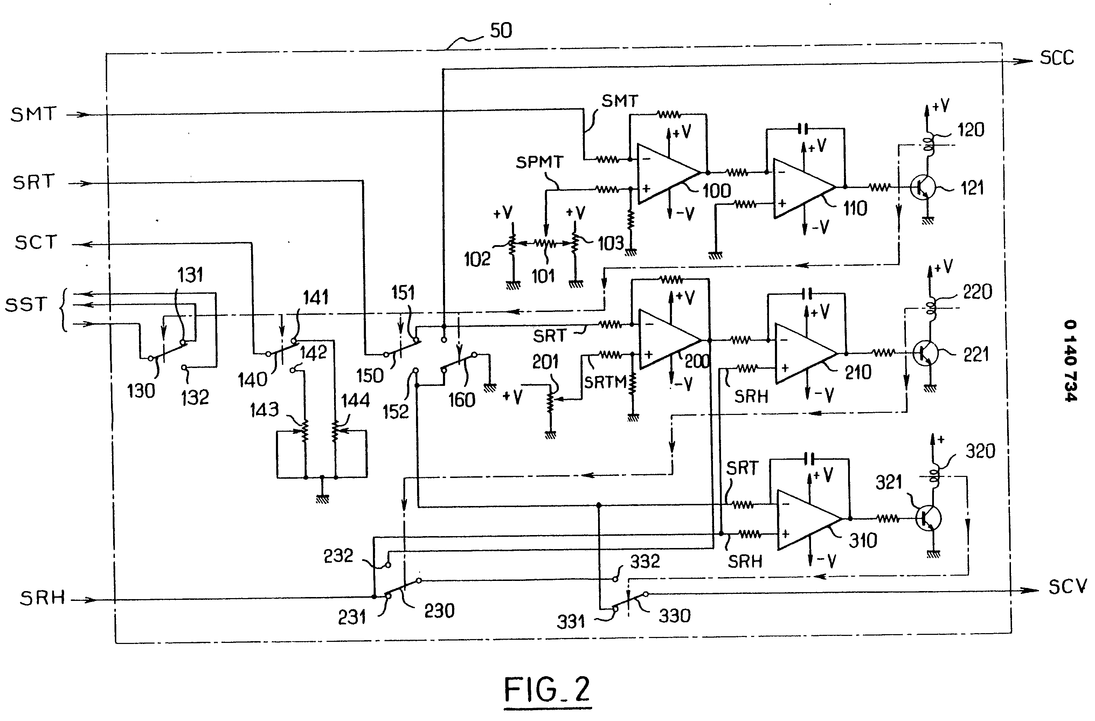

La figure 2 montre de façon détaillée la structure de cet interface 50.

Le signal de mesure de température SMT est tout d'abord amplifié et comparé, dans les étages 100 et 110, à un signal de point mort de température SPMT correspondant à la température auquel s'effectuera le changement de consigne, c'est-à-dire le passage de la position d'été à la position d'hiver. Ce signal SPMT est par exemple déterminé par un montage à trois potentiomètres 101, 102, 103 de façon à permettre un réglage fin du point mort entre 15 et 25°, par exemple.

En sortie de l'étage 110, on dispose ainsi d'une tension positive en été (lorsque la température mesurée est supérieure au point mort) et d'une tension négative en hiver (dans le cas contraire).

En été, le transistor 121 est conducteur, excitant le relais 120 de manière à provoquer la fermeture des contacts 130, 140, 150 et 160.

(Ici et dans la suite, les contacts des relais sont tous représentés sur la figure 2 en position de repos, c'est-à-dire pour un relais non excité).

Le contact 130 détermine le sens d'action du régulateur de température (position 131 : sens direct en hiver ; position 132 : sens inverse en été). Le contact 140 définit la consigne (position 141 : température de consigne d'hiver définie par le potentiomètre 144 ; position 142 : température de consigne d'été définie par le potentiomètre 143). Le contact 150 détermine l'action à réguler en fonction de la température (position 151 : régulation du chauffage en fonction de la température, en hiver ; position 152 : régulation de la ventilation en fonction de la température, en été). Enfin, le contact 160 permet la mise à la masse de la borne 151 ou 152 non commutée par le contact 150. Ce contact 160 permet en particulier de mettre hors service le chauffage en position d'été.

Une seconde série d'étages de l'interface 50 permet de limiter la ventilation en fonction du chauffage, lorsque ce dernier est en service. Cette limitation est une limitation supérieure, qui intervient dans le cas où le signal de régulation d'hygrométrie SRH (appliqué à l'une des entrées de l'étage comparateur 210), est supérieur à une valeur limite autorisée, c'est-à-dire une valeur correspondant à un taux de régulation maximal du chauffage, diminuée de la valeur correspondant au taux effectif de régulation de température.

Cette valeur limite, variable est obtenue au moyen de l'étage soustracteur 200, qui reçoit à son entrée inverseuse le signal de régulation de température SRT, et à son entrée directe un signal SRTM correspondant à une régulation au taux maximal ; ce signal SRTM est un signal constant, fixé par le potentiomètre 201. On notera que, en position d'été, le contact 160 met à la masse l'entrée de l'étage 200 qui recevait précédemment le signal de régulation de température ; cette mise à la masse fait en sorte que la limitation de la ventilation ne pourra jamais intervenir en été.

Lorsque la limitation intervient, une tension positive apparaît en sortie de l'étage 210, ce qui rend passant le transistor 221 et excite le relais 220 ; celui-ci provoque la fermeture du contact 230. De cette manière, en l'absence de limitation, le signal de régulation d'hygrométrie SRH est transmis directement aux moyens de commande de ventilation (position 231 du contact 230). Par contre, lorsque la limitation intervient, le signal qui est transmis aux moyens de commande de ventilation est le signal obtenu en sortie de l'étage 200, c'est-à-dire un signal correspondant à la valeur limite, variable (position 232 du contact 230).

La valeur supérieure de limitation du signal de commande de ventilation obtenue dans cet exemple d'application par soustraction du signal de régulation de température réelle (SRT) à un signal (SRTM) correspondant à un signal de régulation de température maximale peut bien sûr être obtenue par toute application de fonction linéaire ou non, reliant ce signal de chauffage à la limite supérieure du signal de ventilation.

Une troisième série de circuits permet d'obtenir une ventilation forcée en fonction de la température intérieure. En été, en effet, le régulateur de température n'agit plus sur le chauffage, mais sur la ventilation. Pour maintenir cependant une hygrométrie convenable, on va comparer (toujours en position d'été) les signaux de régulation de température et d'hygrométrie SRT et SRH grâce à l'étage comparateur 310. Si le signal SRH est supérieur au signal SRT, une tension positive apparaît en sortie du comparateur 310, le transistor 321 est rendu passant et le relais 320 est excité. Ceci provoque la fermeture du contact 330 dans la position 332 : c'est alors le signal de régulation d'hygrométrie SRH qui est transmis pour la commande des moyens de ventilation. Dans le cas contraire, le relais n'est pas excité et c'est le signal de régulation de température SRT qui commande la ventilation (position 331 du contact 330).

On notera que, en hiver, la borne 152 est mise à la masse par le contacteur 160. De cette manière, il apparaîtra en permanence une tension positive en sortie du comparateur 310, de sorte que le relais 320 sera toujours excité et que la régulation ne pourra jamais être obtenue en fonction de la température, mais uniquement en fonction de l'humidité (avec éventuellement application d'une limitation).

Par ailleurs, il peut être prévu entre l'interface 50 précédemment décrit et le circuit de commande de ventilation 40 un circuit intercalaire (non représenté) permettant de maintenir le signal de commande de ventilation appliqué à l'entrée du circuit 40 à une valeur minimale pour éviter toute gêne des occupants du local, par exemple un minimum de ventilation fixé à 30 %, cette valeur pouvant être éventuellement ajustée en fonction des besoins.

## Revendications

1. Un interface de commande (50) et de régulation de température et d'hygrométrie, cet interface coopérant avec :

a) des moyens régulateurs de température (10) produisant un signal de régulation de température (SRT) en fonction de la différence existant entre un signal de consigne de température (SCT) et un signal de mesure de température (SMT),

b) des moyens régulateurs d'hygrométrie (20), produisant un signal de régulation d'hygrométrie (SRH) en fonction de la différence existant entre un signal de consigne d'hygrométrie (SCH) et un signal de mesure d'hygrométrie (SMH),

c) des moyens de commande de chauffage (30), fonctionnant en réponse à un signal de commande de chauffage (SCC),

d) des moyens de commande de ventilation (40), fonctionnant en réponse à un signal de commande de ventilation (SCV), caractérisé en ce que cet interface de commande (50) est propre à passer d'une position d'été, lorsque le signal de mesure de température (SMT) est supérieur à une valeur prédéterminée (SPMT) de changement de consigne, à une position d'hiver, lorsque le signal de mesure de température est inférieur à cette valeur, cet interface permettant, en position d'été :

a) de délivrer aux moyens régulateurs de température (10) un signal de consigne de température d'été (SCT),

b) de délivrer aux moyens de commande de ventilation (40) un signal de commande de ventilation (SCV) inversement proportionnel au signal de régulation de température (SRT) délivré par les moyens régulateurs de température (10), et

c) de délivrer aux moyens de commande de chauffage (30) un signal nul (potentiel de masse) désactivant ainsi lesdits moyens de commande de chauffage, tandis qu'il permet, en position d'hiver :

a) de délivrer aux moyens régulateurs de la température (10) un signal de consigne de température (SCT) d'hiver, différent du signal de consigne de température d'été,

b) de délivrer aux moyens de commande de chauffage (30) un signal de commande de chauffage (SCC) directement proportionnel au signal de régulation de température (SRT) délivré par les moyens régulateurs de température (10), et

c) de délivrer aux moyens de commande de ventilation (40) un signal de commande de ventilation (SCV) proportionnel au signal de régulation d'hygrométrie (SRH) délivré par les moyens régulateurs d'hygrométrie (20), ce signal de commande de ventilation (SCV) pouvant être limité à une valeur supérieure inversement proportionnelle à l'amplitude du signal de régulation de température (SRT) délivré par les moyens régulateurs de température (10).

2. Un interface selon la revendication 1, caractérisé en ce que la valeur supérieure de limitation du signal de commande de ventilation (SCV) est obtenue par soustraction du signal de régulation de température réel (SRT) à un signal (SRTM) correspondant à un signal de régulation de température maximal, et par comparaison du résultat au signal de régulation d'hygrométrie (SRH), le signal de commande de ventilation étant déterminé à partir de celui des deux signaux comparés ayant la valeur la moins élevée.

3. Un interface selon la revendication 1, caractérisé en ce qu'il est prévu en outre des moyens pour limiter le signal de commande de ventilation (SCV) à une valeur inférieure (SVM) prédéterminée, cette limitation étant réalisée aussi bien en position d'été qu'en position d'hiver.

4. Un interface selon la revendication 1, caractérisé en ce qu'il permet en outre, en position d'été, de substituer au signal de régulation de température (SRT) le signal de régulation d'hygrométrie (SRH) lorsque ce dernier est supérieur au précédent.

## Claims

1. An interface (50) for controlling and regulating temperature and hygrometry, this interface co-operating with :

a) temperature regulation means (10) producing a temperature regulation signal (SRT) as a function of the difference existing between a temperature reference signal (SCT) and a temperature measuring signal (SMT),

b) hygrometry regulation means (20), producing a hygrometry regulation signal (SRH) as a function of the difference existing between a hygrometry reference signal (SCH) and a hygrometry measuring signal (SMH),

c) heating control means (30) operating in response to a heating control signal (SCC),

d) ventilation control means (40), operating in response to a ventilation control signal (SCV), characterised in that this control interface (50) is adapted to pass from a summer position, when the temperature measuring signal (SMT) is higher than a predetermined value (SPMT) of change of reference, to a winter position, when the temperature measuring signal is lower than this value, this interface making it possible, in the summer position :

a) to supply the temperature regulation means (10) with a summer temperature reference signal (SCT),

b) to supply the ventilation control means (40) with a ventilation control signal (SCV) inversely proportional to the temperature regulation signal (SRT) supplied by the temperature regulation means (10), and

c) to supply to the heating control means (30) a zero signal (earth potential) thus de-activating the said heating control means, whereas it makes it possible, in the winter position :

a) to supply to the temperature regulation means (10) a winter temperature reference signal (SCT), different from the summer temperature reference signal,

b) to supply to the heating control means (30) a heating control signal (SCC) directly proportional to the temperature regulation signal (SRT) supplied by the temperature regulation means (10),

c) to supply to the ventilation control means (40) a ventilation control signal (SCV) proportional to the hygrometry regulation signal (SRH) supplied by the hygrometry regulation means (20), this ventilation control signal (SCV) being able to be limited to a higher value inversely proportional to the amplitude of the temperature regulation signal (SRT) supplied by the temperature regulation means (10).

2. An interface according to Claim 1, characterised in that the upper limitation value of the ventilation control signal (SCV) is obtained by subtraction of the actual temperature regulation signal (SRT) from a signal (SRTM) corresponding to a maximum temperature regulation signal and by comparison of the result with the hygrometry regulation signal (SRH), the ventilation control signal being determined from whichever of the two signals compared has the lower value.

3. An interface according to Claim 1, characterised in that means are also provided for limiting the ventilation control signal (SCV) to a lower predetermined value (SVM), this limitation being carried out both in the summer position as well as in the winter position.

4. An interface according to Claim 1, characterised in that in the summer position it also makes it possible to substitute for the temperature regulation signal (SRT), the hygrometry regulation signal (SRH), when the latter is higher than the former.

## Patentansprüche

1. Zwischenglied zum Steuern (50) und Regeln von Temperatur und Feuchtigkeit mit :

a) Temperaturregeleinrichtungen (10), welche ein Temperaturregelsignal (SRT), in Abhängigkeit von der Differenz zwischen einem Solltemperatursignal (SCT) und einem Meßtemperatursignal (SMT) produzieren,

b) Feuchtigkeitsregeleinrichtungen (20), welche ein Feuchtigkeitsregelsignal (SRH), in Abhängigkeit von der Differenz zwischen einem Feuchtigkeitssollsignal (SCH) und einem Feuchtigkeitsmeßsignal (SMH), produzieren,

c) Heizungssteuereinrichtungen (30), welche in Antwort auf ein Heizsteuersignal (SCC) arbeiten,

d) Ventilationssteuereinrichtungen (40), welche in Antwort auf ein Ventilationssteuersignal (SCV) arbeiten,

dadurch gekennzeichnet, daß dieses Zwischenglied zum Steuern (50) geeignet ist, wenn das Meßtemperatursignal (SMT) oberhalb eines vorbestimmten Soll-Änderungs-Wertes (SPMT) ist, von einer Sommerposition überzugehen in eine Winterposition, wenn das Meßtemperatursignal unterhalb dieses Wertes liegt, wobei dieses Zwischenglied in der Sommerposition erlaubt :

a) an die Temperaturregeleinrichtungen (10) ein Sommer-Solltemperatursignal (SCT) zu liefern,

b) an die Ventilationssteuereinrichtungen (40) ein Ventilationssteuersignal (SCV) zu liefern, welches umgekehrt proportional ist zum Temperaturregelsignal (SRT), welches von den Temperaturregeleinrichtungen (10) geliefert wird, und

c) an die Heizungssteuereinrichtungen (30) ein null-Signal (Massepotential), welches so die genannten Heizungssteuereinrichtungen desaktiviert, zu liefern, so daß es in der Winterposition erlaubt :

a) an die Temperaturregeleinrichtungen (10) ein Winter-Solltemperatursignal (SCT) zu liefern,

welches verschieden ist vom Sommer-Solltemperatursignal,

    b) an die Heizungssteuereinrichtungen (30) ein Heizungssteuersignal (SCC) zu liefern, welches direkt proportional ist zu dem Temperaturregelsignal (SRT), welches von den Temperaturregeleinrichtungen (10) geliefert wird, und

    c) an die Ventilationssteuereinrichtungen (40) ein Ventilationssteuersignal (SCV) zu liefern, welches proportional ist zu dem Feuchtigkeitsregelsignal (SRH), welches von den Feuchtigkeitsregeleinrichtungen (20) geliefert wird, wobei das Ventilationssteuersignal (SCV) auf einen oberen Wert begrenzt sein kann, welcher umgekehrt proportional ist zur Amplitude des Temperaturregelsignals (SRT), welches von den Temperaturregeleinrichtungen (10) geliefert wird.

2. Zwischenglied nach Anspruch 1, dadurch gekennzeichnet, daß der obere Grenzwert des Ventilationssteuersignals (SCV) erhalten wird durch Subtraktion des Regelsignals der reellen Temperatur (SRT) von einem Signal (SRTM), welches einem Regelsignal der maximalen Temperatur entspricht, und durch Vergleich des Resultats mit dem Feuchtigkeitsregelsignal (SRH), wobei das Ventilationssteuersignal ausgehend von demjenigen der beiden Vergleichssignale, bestimmt wird, dessen Wert am wenigsten angestiegen ist.

3. Zwischenglied nach Anspruch 1, dadurch gekennzeichnet, daß ferner Einrichtungen zum Begrenzen des Ventilationssteuersignals (SCV) auf einen vorbestimmten unteren Wert (SVM) vorgesehen sind, wobei diese Begrenzung sowohl in der Sommerposition als auch in der Winterposition erfolgt.

4. Zwischenglied nach Anspruch 1, dadurch gekennzeichnet, daß es ferner erlaubt, in der Sommerposition das Temperaturregelsignal (SRT) durch das Feuchtigkeitsregelsignal (SRH) zu ersetzen, wenn das letztere oberhalb des vorhergehenden liegt.

## FIG_1

SCC

SCV

FIG. 2

50

SMT

SRT

SCT

SST

SRH

2